# EUROPEAN PATENT APPLICATION

(11) **EP 2 803 710 A1**
(43) Date of publication of application: **19.11.2014**
(21) Application number: 13167584.5
(22) Date of filing: 14.05.2013
(51) Int. Cl.: C09J 7/02, C08F 290/06, C09D 183/10, C09D 151/08

(54) **Adhesive film for graphics containing an anti-graffiti coating**

(71) Applicant: 3M Innovative Properties Company, Saint Paul, MN 55133-3427 (US)
(72) Inventor: Audenaert, Frans, 2070 Zwijndrecht (BE); Jost, Michael, 41453 Neuss (DE); Buerger, Johannes, 41453 Neuss (DE)
(74) Representative: Gabriel, Kiroubagaranne

(57) **Abstract**

An adhesive film for producing graphics is provided. The adhesive film comprises a polymeric film layer having on one major side an adhesive layer and on the opposite major side an anti-graffiti coating, wherein the anti-graffiti coating comprises a reaction product of at least
a. a major amount of one or more compounds having at least two free radical polymerizable groups and at least
b. a minor amount of one or more polysiloxane additives having two or more free radical polymerizable groups and

wherein the adhesive film is colored. Also provided are methods of making a graphic and substrates comprising an adhesive film.

## Description

The present disclosure relates to an adhesive film for producing graphics having an anti-graffiti coating. The anti-graffiti coating comprises the reaction product of compounds having free radical polymerizable groups and polysiloxane additives. The disclosure also relates to a method of making graphics.

Adhesive films are widely used in producing graphics or decorations on substrates. For example adhesive films are used to provide advertisement, logos or company names and information on vehicles such as vans, busses, trains, trams etc. They may also be used on buildings. Typically, the adhesive film will have to remain in place for an extended period of time, for example for the duration of a brand campaign or up to several years during the lifetime of the coated subject. Public applications are often subject to vandalism and graffiti issues, such as damage caused by spray painting, felt tip markers and other methods. Removing graffiti is a cumbersome and expensive process and typically requires harsh solvents and/or cleaning agents.

In order to avoid that stains caused by graffiti adhere to the surface, and the image gets damaged, a protective coating can be applied onto the graphic film. Such protective coatings may be based on organic silanes or silane-modified polysiloxanes as described for example in EP 2463325.

While cured silane based polysiloxanes show good repellency properties, they typically require relatively high curing temperature, for example 130°C or higher, and for extended period of time, for example over 10 min. Many synthetic polymers used in graphics do not withstand such curing conditions. Accordingly it is desirable to develop protective coating formulations with a fast curing profile at low temperature.

In the following there is provided an adhesive film for producing graphics comprising a polymeric film layer having on one major side an adhesive layer and on the opposite major side an anti-graffiti coating, wherein the anti-graffiti coating comprises a reaction product of at least
a. a major amount of one or more compounds having at least two free radical polymerizable groups and at least
b. a minor amount of one or more polysiloxane additives having two or more free radical polymerizable groups and
wherein the adhesive film is colored.

In another aspect there is provided a method of making a graphic comprising the imaging of an adhesive film as provided above.

In a further aspect there is provided a substrate having on one major surface an adhesive film as provided above.

The anti-graffiti coating can be cured fast and at ambient temperature (i.e. between 10°C and 35°C) by using actinic radiation.

The anti-graffiti coating protects the outer surface of the adhesive film from staining or dirt accumulation and/or facilitates stain or dirt removal. Because the coating prevents stains from penetrating into the polymeric film, the coated film typically has easy-to-clean properties and easy wipe-off of attached soil. Stains, for example made by markers or graffiti paints, can be conveniently removed with a wipe, typically without the need to use aggressive solvents and/or cleaning agents. In some embodiments, such stains can be removed with a dry wipe. The anti-graffiti coating desirably does not alter the appearance and the conformability of the graphic film.

Before any embodiments of this disclosure are explained in detail, it is to be understood that the disclosure is not limited in its application to the details of compositions and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to be of broad scope and is meant to encompass the items listed thereafter, equivalents thereof and further items. The word "consisting of" is meant to be of limiting scope and is meant to encompass only the items listed thereafter and equivalents thereof but not any additional items. The term "consisting essentially of" has a meaning as defined in the description below.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

With the term 'major amount' as used herein above and below is meant an amount that is 50% by weight or more based on the total weight of the reaction product. In accordance the term 'minor amount' refers to an amount that is less than 50% by weight based on the total weight of the reaction product. The reaction product typically comprises the polysiloxane additives in amounts between 0.1 and 40% by weight, preferably between 0.2 and 30% by weight. Particularly suitable reaction products comprise polysiloxanes in amounts up to 20% by weight based on the total weight of the reaction product.

With the term 'free radical polymerizable group' as used herein above and below is meant a group capable of undergoing a free radical reaction when exposed to radicals generated by decomposition of a suitable initiator under heat and/or radiation, such as actinic radiation or e-beam radiation. Examples of suitable free radical polymerizable groups include ethylenically unsaturated groups selected from vinyl groups, such as in vinyl ethers, vinyl esters, vinyl ketones or vinyl amides ; allyl groups, such as in allyl esters and allyl ethers ; acryl and methacryl groups, such as in acrylates and methacrylates, acrylamides and methacrylamides ; maleates and fumarates, maleimides. Of these, vinyl groups, acrylates and methacrylates are preferred.

The term "graphics" as used herein above and below encompasses graphic articles, i.e. articles which contain a graphic image or design. Preferably the graphic articles include graphic film articles. The adhesive film used for producing graphics is colored. The color pigments can be present in any one of the polymeric film layers, the adhesive layer and/or in optional additional layers, such as a primer layer as will be explained in greater detail below. For example, in one embodiment the adhesive film can be white and the polymeric film is colored white. White pigments that may be used include titanium dioxide or zinc oxide. In another embodiment, the adhesive film can be black and the polymeric film is colored black. Suitable pigments for coloring the polymeric film include carbon blacks. In a further embodiment, a colored adhesive film, having a color other than white or black may be provided by adding color pigments to the polymeric film. In such cases, it may be advantageous to add a primer layer with a white pigment in case of light colors or with a black pigment for darker colors. In yet a further embodiment, an adhesive film may have a metallic look, including a colored metallic look. An adhesive film with a metallic look may be provided by adding a primer layer comprising metal particles such as aluminum flakes. The polymeric film layer in such adhesive films will typically be clear transparent. Further, where in addition to the metallic effect a color effect, for example a color other than black or white, is desired a color pigment may typically be added to this primer layer.

The components and methods will now be described in greater detail.

### POLYMERIC FILM LAYER

The polymeric film layer may comprise one or more layers of polymers and it can be formed from a variety of different materials. In a typical embodiment the polymeric film comprises homo- and copolymers of vinyl chloride (PVC), in particular plasticized PVC.

For environmental reasons, it might be suitable to use one or more layers comprising a polymer selected from the group consisting of polyolefin, polyester, and combinations thereof.

In one embodiment, the polymeric film layer can be colored and may include color pigments such as white pigments, black pigments and/or color pigments other than black and white. Where the polymeric film layer includes color pigments, they can be comprised in the film in an amount of 1 to 100 parts per 100 parts by weight of the polymeric film.

In an alternative embodiment the polymeric film layer can be clear transparent. The term 'clear transparent' encompasses that when the film is disposed on a substrate, an image disposed on the substrate is visible through the thickness of the transparent film. In many embodiments, a clear transparent film allows the image to be seen through the thickness of the film without substantial loss of image clarity. In some embodiments, the clear transparent film may have a matte or glossy finish.

The thickness of the polymeric film may vary widely but typically is at least 20 microns. In a particular embodiment, the polymeric film may have a thickness of 25 to 100 microns. In another embodiment, the thickness may be from 30 microns to 80 microns or from 30 microns to 60 microns.

The polymeric film may include further optional components such as plasticizers, UV stabilizers, heat stabilizers and rheology modifiers.

### ANTI-GRAFFITI COATING

The anti-graffiti coating comprises a reaction product of
a) at least a major amount of one or more compounds having at least two free radical polymerizable groups and
b) at least a minor amount of one or more polysiloxane additives having two or more free radical polymerizable groups.

### a) COMPOUNDS HAVING AT LEAST TWO FREE RADICAL POLYMERIZABLE GROUPS

The compounds having at least two free radical polymerizable groups typically comprise a hydrocarbon group and at least two ethylenically unsaturated groups. Such compounds are well known and commercially available. Useful compounds include di(meth)acryl containing compounds such as 1,3- butylene glycol diacrylate, 1,4-butanediol diacrylate, 1,6-hexanediol diacrylate, 1,6- hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated bisphenol A diacrylate, hydroxypivalaldehyde modified trimethylolpropane diacrylate, neopentyl glycol diacrylate, polyethylene glycol diacrylate, propoxylated neopentyl glycol diacrylate, tetraethylene glycol diacrylate, tricyclodecanedimethanol diacrylate, triethylene glycol diacrylate, tripropylene glycol diacrylate. Further suitable compounds include higher functional (meth)acrylates. Examples include tri(meth)acryl containing compounds such as pentaerythritol triacrylate ("PET3A"), commercially available for example as SR444 (Sartomer, Arkema-group). Further examples include glycerol triacrylate, trimethylolpropane triacrylate, ethoxylated triacrylates (e.g., ethoxylated trimethylolpropane triacrylate, propoxylated triacrylates (e.g., propoxylated glyceryl triacrylate, propoxylated trimethylolpropane triacrylate. Further suitable compounds include for example pentaerythritol tetraacrylate ("PET4A"), commercially available for example as SR295 (Sartomer, Arkema-group). Further examples include ditrimethylolpropane tetraacrylate, dipentaerythritol pentaacrylate, ethoxylated pentaerythritol tetraacrylate and caprolactone modified dipentaerythritol hexaacrylate.

Further examples of polyfunctional (meth)acrylates include oligomeric (meth)acryl compounds such as for example urethane di- and triacrylates, isocyanurate polyacrylates, polyester polyacrylates, epoxy polyacrylates and polyether polyacrylates and combinations thereof, such as aliphatic polyester/polyether based urethane polyacrylates. Such compounds are available from vendors such as, for example, Sartomer, Arkema-group, Colombes Cedex, France ; Cytec Surface Specialties SA/NV, Drogenbos, Belgium and Aldrich Chemical Company, Wisconsin, USA.

Further examples include di-vinyl ethers, such as 1,4-butane diol divinyl ether, diethylene glycol divinyl ether, cyclohexane dimethanol divinyl ether and triethylene glycol divinyl ether, all commercially available from BASF.

In a particular embodiment, the compounds comprise at least three (meth)acryl functional groups and include commercially available examples such as trimethylolpropane triacrylate (TMPTA) available under the trade designation "SR351", pentaerythritol tri/tetraacrylate (PETA) available under the trade designation "SR444" or "SR494", dipentaerythritol pentaacrylate available under the trade designation"SR399" and aliphatic polyester/polyether based urethane diacrylate oligomers commercially available under the trade designation "CN 981 ", all available from Sartomer, Arkema-group. These compounds can be used single or as mixtures.

The compounds having at least two free radical polymerizable groups are used in amounts of 50% by weight or higher based on the total weight of the reaction product. Particularly suitable compounds are used in amounts of 60% by weight, more suitable 70% by weight or higher. Preferably the compounds are used in amounts of 80% by weight or higher.

### b) POLYSILOXANE ADDITIVES

The polysiloxane additives herein provided have two or more free radical polymerizable groups.

Suitable polysiloxane additives have at least 2 or 3, preferably at least 4, 6 or even 8 free radical polymerizable groups per molecule.

The polysiloxane additives have at least one polysiloxane moiety having from 5 to 250 SiO-units and at least one terminal group (also referred herein as group T) comprising the free radical polymerizable groups. The polysiloxanes can have a linear polymer backbone or a branched structure wherein the polymer backbone comprises side chains.

The polysiloxane additives can be selected from polysiloxane Michael adducts or from polysiloxane condensates as will now be described in greater detail.

### b.1. Polysiloxane Michael adducts

In one embodiment, the polysiloxane additives are the reaction product of a Michael addition reaction and are further referred to as "Michael adducts". As used herein above and below the term 'Michael addition reaction' refers to a nucleophilic addition reaction of a compound having a nucleophilic group with a compound having an alpha, beta unsaturated carbonyl compound. The polysiloxane additives of this embodiment are the Michael adducts of
(i) a polysiloxane having at least one terminal nucleophilic group selected from a primary or secondary amino group or a thiol group and
(ii) a compound having at least two α,β-unsaturated carbonyl groups.

The reactants are chosen such that the Michael adducts thus obtained have two or more free radical polymerizable groups. In a preferred embodiment, the Michael adducts are formed from a polysiloxane having two or more terminal nucleophilic groups and a compound having at least two, preferably at least three or even more α,β-unsaturated carbonyl groups. The polysiloxane additives thus prepared typically have more than two, preferably at least 3, 4, 6 or even 8 free radical polymerizable groups per molecule.

The Michael adducts can be prepared under conditions known for Michael addition reactions. The reaction can be done without solvent or in the presence of a solvent. Suitable solvents include isopropyl alcohol, 1-hexanol, tetrahydrofuran (THF), toluene and halogenated solvents, such as C₄F₉OCH₃, C₄F₉OC₂H₅ and trifluorotoluene. The reaction is preferably done in the absence of a solvent.

The reaction can be done in the presence of a catalyst or in the absence of a basic or acidic catalyst. Suitable catalysts include LiClO₄, 1,8 diazabicyclo [5.4.0] undec-7-ene] (DBU) and stannous octanoate.

The reactants and the Michael adducts will now be described in greater detail.

### (i) Polysiloxanes having at least one terminal nucleophilic group

The polysiloxanes having at least one terminal nucleophilic group comprise between 5 and 250 SiO-units. The polysiloxanes can have a linear polymer backbone or a branched structure wherein the polymer backbone comprises side chains. The polysiloxanes further comprise at least one, preferably more than one (e.g. at least 2 or more) terminal primary or secondary amine groups or thiol groups or combinations thereof.

Typically, the polysiloxanes comprise repeating units of the formula -Si(R¹R²)-O-, optionally in combination with repeating units of the formula -Si(R⁵R⁶)-O -, wherein the groups R1, R2 and R5 independently represent an alkyl group or an aryl group. R6 represents an alkyl group containing a primary or secondary amine or a thiol group, preferably at a terminal position. This way a polysiloxane Michael adduct can be formed having free radical polymerizable groups in side chains of the polymer.

Suitable polysiloxanes include linear or branched polydialkyl siloxanes, polyalkylaryl siloxanes or polydiarylsiloxanes, wherein the amine or thiol groups are situated at the end of the polymer chain, i.e. in the end group of the polymer backbone and/or in a terminal portion of side chains. Representative examples of polysiloxanes comprising at least one terminal nucleophilic group include those of the general formula (I) :

X-Q¹-[Si(R⁵R⁶)-O]_{q}-[Si(R¹R²)-O]ₚ-Si(R³R⁴)-Q²-X' (I)

wherein p represents an integer between 5 and 200; q is 0 or an integer between 1 and 50 and p+q is an integer between 5 and 250. Each R1, R2, R3, R4 and R5 independently represents an alkyl group or an aryl group. R6 represents a group Q3-X". X, X' and X" independently represent H, a group containing a primary or secondary amine or a thiol, preferably at a terminal position. In the above formula at least one of X, X' or X" is not H. Q1, Q2 and Q3 each independently represent a linking group containing 1 to 10 carbon atoms, which may contain sulfur, nitrogen and/or oxygen atoms. In a preferred embodiment each of X, X' and X" independently represents a primary or secondary amino group. In the above formula the groups -[Si(R⁵R⁶)-O]- and -[Si(R¹R²)-O]- may be present in blocks or may be randomly distributed.

Particularly suitable polysiloxanes include primary and secondary amino terminated polysiloxanes. Representative examples include those of the formula (II):

NHR⁷-(CH₂)ₐ-[Si(R⁵R⁶)-O]_{q}- [Si(R¹R²)O]ₚ -Si(R³R⁴)-(CH₂)_{b}-NHR^{7'} (II)

wherein a and b are integers from 1 to 20, p, q, R1, R2, R3, R4 and R5 are as defined above, R6 represents a group Q3-NHR7"', wherein Q3 is as defined above.
R7, R7' and R7"' independently represent H or an alkylgroup having from 1 to 30 carbon atoms, which may contain sulfur, nitrogen and/or oxygen. In a preferred embodiment, q is 0 and both R7 and R7' represent H.

Polysiloxanes having amine or thiol end groups are commercially available for example under the trade FLUID NH 15D, FLUID NH 40D, FLUID NH 130D (from Wacker, Germany), KF-8010, KF-8012, X-22-161 A, X-22-161 B, KF-8008 (diamine end groups), KF-665, KF-664 (amine-ending pendent groups) and X-22-167B (dithiol end groups), KF-2001, KF-2004 (thiol-ending pendent groups) (from Shin-Etsu, Japan).

### (ii) Compounds having at least two α,β-unsaturated carbonyl groups

Compounds having at least two α,β-unsaturated carbonyl groups can be selected from a polyfunctional α,β-unsaturated ketone, acrylate, methacrylate, acrylamide, methacrylamide or maleimide. In a preferred embodiment, the α,β-unsaturated carbonyl groups are selected from acrylate and methacrylate groups, more in particular from acrylate groups.

Suitable examples of polyfunctional acrylates include, for example, 1,4-butanediol diacrylate, 1,6-hexanediol diacrylate, tripropyleneglycol diacrylate, polyethyleneglycol diacrylate, trimethylolpropane triacrylate, ethoxylated triacrylates (e.g., ethoxylated trimethylolpropane triacrylate), propoxylated triacrylates (e.g., propoxylated glycerol triacrylate) and tris(2-hydroxyethyl)isocyanurate triacrylate. Further suitable acrylates include for example ditrimethylolpropane tetraacrylate, dipentaerythritol pentaacrylate, pentaerythritol tetraacrylate and ethoxylated pentaerythritol tetraacrylate.

The polysiloxane Michael adducts obtained by the reaction of the reactants described above yield polysiloxanes comprising from 5 to 250 SiO-units and one or more terminal groups T.

In one embodiment, representative examples of groups T include those of the formulae (IIIA) and (IIIB)

-N(R¹²)ᵣ[-CH₂CHR⁹-C(=O)O-R¹⁰-(OCO-CR¹¹=CH₂)ₙ]₂₋ᵣ (IIIA)

and

-S-CH₂CHR⁹-C(=O)O-R¹⁰-(OCO-CR¹¹=CH₂)ₙ (IIIB)

wherein R12 represents H or a group having from 1 to 30 carbon atoms, which may contain sulfur, nitrogen and/or oxygen, r is 0 or 1, n is an integer from 1 to 5. R9 and R11 represent H or a CH3 group. R10 represents a linking group containing from 1 to 30 carbon atoms, which may contain sulfur, nitrogen and/or oxygen atoms, In a preferred embodiment R10 represents an alkylene group.

In one embodiment the Michael adducts may comprise polysiloxanes according to the general formula (IV):

Aₓ-Q¹-[Si(R⁵R⁶)-O]_{q}-[Si(R¹R²)-O]ₚ-Si(R³R⁴)-Q²-A'_{y} (IV)

wherein R1, R2, R3, R4 and R5 independently represent an alkyl group or an aryl group, R6 represents a side chain -Q3-A"z ; Q1,Q2 and Q3 each independently represent a linking group containing 1 to 10 carbon atoms, which may contain sulfur, nitrogen and/or oxygen atoms, p represents an integer between 5 and 200 ; q is 0 or an integer between 1 and 50 and p+q is an integer between 5 and 250 ; x, y and z represent, independently from each other integers of 1 to 3 and wherein each A, A' and A" independently represent H or a terminal group T with the proviso that at least one of A, A' or A" is not H. In the above formula the groups -[Si(R⁵R⁶)-O]-and -[Si(R¹R²)-O]- may be present in blocks or may be randomly distributed.

In one particular embodiment q is 0 and both A and A' independently represent a group T.

### b.2. Polysiloxane condensates

In an alternative embodiment, the polysiloxane additives provided herein comprise condensates of
i) a polysiloxane having at least one isocyanate reactive group,
j) a polyisocyanate and
k) a compound having at least one free radical polymerizable group and an isocyanate reactive group and
wherein the functionality of the individual reactants is chosen so as to provide a polysiloxane condensate having two or more free radical polymerizable groups.

The reactants and the polysiloxane condensates will now be described in greater detail.

### i) Polysiloxane having at least one isocyanate reactive group

With the term 'isocyanate reactive group' is meant a functional group that will react with an isocyanate group under typical reactive conditions for reacting an isocyanate group. Typical reactive conditions include reacting at a temperature of 20 to 150°C, for example 30 to 120°C and typically involve the use of a catalyst. Generally, an isocyanate reactive group includes at least one Zerewittenoff hydrogen. Useful examples of isocyanate reactive groups include: alcohols, amines, thiols and carboxylic acids and derivatives such as for example -CO₂R³, where R³ is hydrogen or hydroxyalkyl, -C(O)N(R¹)(R²), where R¹ and R² are independently hydrogen, hydroxyalkyl or polyalkylenepolyamine. Particularly useful isocyanate reactive groups include -OH, -NH- and -NH2 groups.

The polysiloxanes having at least one isocyanate reactive group comprise between 5 and 250 - SiO- units. The polysiloxanes can have a linear polymer backbone or a branched structure wherein the polymer backbone comprises side chains.

Polysiloxanes comprising an isocyanate reactive group comprise at least one, preferably more than one (e.g. at least 2) terminal amine groups, alcohol groups, thiol groups or combinations thereof. Typically, they comprise repeating units of the formula -Si(R¹R²)-O-, optionally in combination with repeating units of the formula -Si(R⁵R⁶)-O -, wherein the groups R1, R2 and R5 independently represent an alkyl group or an aryl group. R6 represents an alkyl group containing an amine, alcohol or thiol group, preferably at a terminal position. This way free radical polymerizable groups can be introduced at side chains in the molecule.

Suitable polysiloxanes include linear or branched polydialkyl siloxanes, polyalkylaryl siloxanes or polydiarylsiloxanes, wherein the amine, alcohol or thiol groups are situated at the end of the polymer chain, i.e. in the end group of the polymer backbone and/or in a terminal portion of side chains. In a particularly suitable embodiment, the amine, alcohol or thiol groups are comprised in the end groups of the polysiloxane backbone.

Representative examples of polysiloxanes comprising at least one nucleophilic group include polysiloxanes of the general formula (I) as given above with respect to the Michael adducts. Particular useful examples of polysiloxanes include hydroxyl terminated polysiloxanes, such as, for example, hydroxyl terminated polydialkylsiloxanes. Specific examples include those of the formula (V):

HO-(CH₂)ₐ-[Si(R⁵R⁶)-O]_{q} -[Si(R¹R²)O]ₚ -Si(R³R⁴)-(CH₂)_{b}-OH (V)

wherein a and b are independently 1,2,3 or 4, p represents an integer between 5 and 200 ; q is 0 or an integer between 1 and 50 and p+q is an integer between 5 and 250 and each R1, R2, R3, R4 and R5 each independently represents an alkyl group or an aryl group. R6 represents a side chain that may comprise OH-groups. Preferably q is 0 and each of R1, R2, R3 and R4 represent a methyl group.

Further useful examples include amino group terminated polysiloxanes, such as for example amino group terminated polydialkylsiloxanes. Specific examples include those of the formula (VI):

NHR⁸-(CH₂)ₐ-[Si(R⁵R⁶)-O]_{q} -[Si(R¹R²)O]ₚ -Si(R³R⁴)-(CH₂)_{b}-NHR^{8'} (VI)

wherein a, b, p and R1, R2, R3, R4 and R5 are as defined above, R8 and R8' independently represents H or a group having from 1 to 30 carbon atoms, which may contain sulfur, nitrogen and/or oxygen. R6 represents a side chain that may comprise NHR8"-groups, where R8" represents H or a group having from 1 to 30 carbon atoms. Preferably q is 0, both R8 and R8' represent H and R1, R2, R3 and R4 represent a methyl group.

Polysiloxanes having alcohol, amine or thiol end groups are commercially available and include for example IM11, IM15, IM22, IM47 (diols), FLUID NH 15 D, FLUID NH 40D, FLUID NH 130D (diamines), FLUID OH 15D, FLUID OH 40D (alcohols) (all available from Wacker, Germany), KF-801 0, X-22-161 A, X-22-161 B, KF-8012, KF-8008 (diamine end groups), KF-665, KF-664 (amine-ending pendent groups), X-22-167B (dithiol end groups), KF-2001, KF-2004 (thiol-ending pendent groups) KF-6001 and KF-6002 (diols) (all available from Shin-Etsu, Japan).

### j) Polisocyanate

The polyisocyanate may be an aliphatic, alicyclic or aromatic compound. Preferably the polyisocyanate comprises a di-isocyanate. Examples include e.g., isophorone diisocyanate (IPDI), hexamethylene diisocyanate, 2,2,4-trimethyl-1,6-hexamethylene diisocyanate, dicyclohexylmethane-4,4'-diisocyanate; 4,4'- methylenediphenylene diisocyanate, 4,6-di-(trifluoromethyl)-1,3-benzene diisocyanate, 2,4-toluene diisocyanate, 2,6-toluene diisocyanate, o, m, and p-xylylene diisocyanate, 4,4'-diisocyanatodiphenylether, 3,3'-dichloro-4,4'-diisocyanatodiphenylmethane, 4,5'-diphenyl diisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3- naphthylene diisocyanate, and 1,8-dinitro-2,7-naphthylene diisocyanate.

In addition to di-isocyanates, also tri- and higher functional isocyanates can be used. Useful examples include isocyanurates e.g., cyclic trimer of hexamethylenediisocyanate and cyclic trimer of isophorone diisocyanate, and biurets containing tri-isocyanates. Typically the amount (in equivalents) of tri- and higher functional isocyanate should not exceed 40% of the total equivalents of isocyanate used, more preferably it should not exceed 25%.

### k) Compound having at least one free radical polymerizable groups and an isocyanate reactive group

Typically these compounds are hydrocarbon monomers and include isocyanate reactive vinyl ethers, acrylamides, acrylates and methacrylates. Particularly suitable compounds include isocyanate reactive acrylate or methacrylate monomers that can be represented by the formula VII:

Z-Q⁴-[OC(O)CR⁷=CH₂]ₜ (VII)

wherein Z represents an isocyanate reactive group, including OH or NR'H where R' is H or a lower alkyl group of 1 to 4 carbon atoms, R7 is a lower alkyl with 1 to 4 C atoms or H and t is 2 to 6. Q4 represents an organic linking group having a valence of t+1. Linking group Q4 is independently selected from the group consisting of an alkylene, an arylene, an aralkylene, an alkarylene, a straight or branched chain or cyclic group containing cannecting group optionally containing heteroatoms such as O, N, and S and optionally a heteroatom-containing functional group such as carbonyl or sulfonyl, and combinations thereof.

Suitable examples of isocyanate reactive acrylate or methacrylates include 1,3-glycerol di(meth)acrylate, pentaerythritol triacrylate, commercially available as SR444 from Sartomer, Arkema-group, Colombes Cedex, France and dipentaerythritol pentaacrylate, commercially available as SR399 from Sartomer, Arkema-group. Further suitable compounds include compounds comprising (poly)oxyalkylene groups including poly(meth)acrylates of a polyethylene glycol, poly(meth)acrylates of a block copolymer of ethylene oxide and propylene oxide, and poly(meth)acrylates of amino terminated polyethers. Single isocyanate reactive acrylate or methacrylate compounds can be used as well as mixtures thereof.

In one embodiment, the polysiloxane condensate can be formed by first reacting polysiloxane i) with an equivalent excess of polyisocyanate j) followed by reaction with a compound k) having at least one free radical polymerizable group and an isocyanate reactive group. A suitable example of this embodiment comprises the reaction of a polysiloxane diol or diamine with a polyisocyanate, followed by a reaction with a (poly)acrylate having at least 2, preferably at least 3 or 4 acrylic groups and comprising an isocyanate reactive group, including an amino or hydroxyl group. This reaction provides at least one condensate that can be represented by a polysiloxane urethane polyacrylate or polysiloxane urea polyacrylate having two or more radical polymerizable groups. The reactions can be carried out in a solvent and under conditions known in the art, typically in the presence of a catalyst. Suitable catalysts include tin salts or complexes such as dibutyltin dilaurate, stannous octanoate, stannous oleate, tin dibutyldi-(2-ethyl hexanoate), stannous chloride, salts or complexes of bismuth, zinc, zirconium, aluminum and others known in the art. The amount of catalyst present will depend on the particular reaction. Generally, suitable catalyst concentrations are from about 0.001 to about 10 % by weight, particularly suitable between abort 0.1% and about 5% by weight based on the total weight of reactants.

It is understood that the polysiloxane Michael adducts as well as the polysiloxane condensates may be complex mixtures and may contain mixtures of the polymers described above or mixtures of the polymers above and other reaction products or by-products. It is also understood that the specific composition of the polysiloxane units depends on the polysiloxanes used as reactants. Consequently, the polysiloxane additives comprise a polysiloxane unit comprising between 5 and 250 -SiO- units. The polysiloxane unit can have a linear polymer backbone or a branched structure wherein the polymer backbone comprises side chains. Typically, they comprise repeating units of the formula -Si(R₁R₂)-O-, optionally in combination with repeating units of the formula -Si(R₅R₆)-O -, wherein the groups R1, R2 and R5 independently represent an alkyl group or an aryl group and R6 represents a side chain.

Suitable polysiloxanes units include linear or branched polydialkyl siloxane units, polyalkylaryl siloxane units or polydiarylsiloxane units. Preferred polysiloxane units include linear or branched polydimethyl siloxane units.

The anti-graffiti coating is formed by radiation curing a composition comprising
a) the one or more compounds having at least two free radical polymerizable groups as provided above and
b) the one or more polysiloxane additives having two or more free radical polymerizable groups as provided above.

To facilitate the reaction, the coating composition typically comprises at least one free-radical thermal initiator and/or photoinitiator. Useful free-radical thermal initiators include, for example, azo, peroxide, persulfate, and redox initiators, and combinations thereof.

Useful free-radical photoinitiators include, for example, those known as useful in UV curing of acrylate polymers. Such initiators include aromatic ketones such as benzophenone, anthraquinone, acetophenone, benzoin and benzoin ethers, acylphosphine oxide (APO) and bisacylphosphine oxide (BAPO) and their derivatives. Free radial photoinitiators are commercially available and include those available from BASF under the trade designation "IRGACURE", "LUCIRIN" and "DAROCUR". Combinations of two or more photoinitiators may be used.

Generally, suitable initiator concentrations are from about 0.1% to about 10% by weight, particularly suitable between about 0.5% and about 7% by weight based on the total weight of the reactive compounds a) and b). The curable composition can be cured at ambient temperature in an inert atmosphere. In a particular embodiment, the curable composition may be cured at ambient temperature in the presence of air.

In order to increase the cure speed, in particular when curing is done in the presence of air, a cure accelerator or synergist can be added in amounts up to 5 % by weight based on the total weight of the curable compounds. Useful examples of cure accelerators include amino functional acrylates, such as for example EBECRYL™ P116, commercially available from Cytec Surface Specialties and Speedcure DMB {2-(dimethylamino)benzoate} available from Lambson.

The curable compositions may optionally be diluted with solvents, including alcohols such as 2-propanol. The compositions may further include other optional additives. For example, the compositions may include antistatic agents, wetting agents, waxes, leveling agents, light and/or UV- stabilizers, UV-absorbers, ozon stabilizers, antioxidants, inhibitors, fillers, lubricants, pigments, dyes, flow agents and viscosifiers.

### ADHESIVE LAYER

The adhesive film for producing graphics comprises an adhesive layer. The adhesive used in the adhesive layer is not particularly restricted. The thickness of the adhesive layer may vary widely. Typically, the adhesive layer will have a thickness of at least 10 micrometer, for example at least 15 micrometer or at least 20 micrometer. In a typical embodiment the thickness of the adhesive layer is from 15 micrometer to 50 micrometer. In a particular embodiment, the adhesive layer comprises a pressure sensitive adhesive (PSA). Pressure sensitive adhesives useful in the present invention can be self-tacky or require the addition of a tackifier. Particularly suitable adhesives for use in the present invention include pressure sensitive adhesives based on an acrylic polymer. Examples of adhesives include PSA's, hot melt or heat activated adhesives that are pressure sensitive at the time of application such as pressure sensitive adhesives disclosed in U.S. Pat. No. 4,994,322 (Delgado et al), U.S. Pat. No. 4,968,562 (Delgado), EP 0 570 515, and EP 0 617 708; and the pressure sensitive adhesives disclosed in U.S. Pat. No. 5,296,277 and 5,362,5165 (both Wilson et al) and U.S. Pat. No. 5,141,790 (Calhoun et al) and WO 96/1687 (Keller et al) and any other type of PSA disclosed in Handbook of Pressure-Sensitive Adhesives, Ed. D. Satas, 2.sup.nd Edition, Von Nostrand Reinhold, N.Y., 1989. Other examples of PSA's are, described in U.S. Pat. Nos. Re 24,906 (Ulrich), U.S. Pat. No. 4,833,179 (Young et al), U.S. Pat. No. 5,209,971 (Babu et al), U.S. Pat. No. 2,736,721 (Dester) and U.S. Pat. No. 5,461,134 (Leir et al) and in the Encyclopedia of Polymer Science and Engineering vol. 13, Wiley-Interscience Publishers, New York, 1988, and Encyclopedia of Polymer Scieinced and Engineering, vol. 13, Wiley-Interscience Publishers, New York, 1964. Acrylate-based PSA's which include those described in U.S. Pat. Nos. 4,181,752 (Clemens et al) and U.S. Pat. No. 4,418,120 (Kealy et al), WO 95/13331 and in Handbook of Pressure-Sensitive Adhesives, Ed. D. Satas, 2.sup.nd Edition.

Particularly useful PSA's include acrylic polymers comprising repeating units of one or more alkylacrylates or alkylmethacrylates (further referred to as alkyl(meth)acrylates) of which the alkyl group has from 1 to 20 carbon atoms, for example 4 to 12 carbon atoms. Examples of alkyl(meth)acrylate monomers that may be used include isobornyl(meth)acrylate, ethyl(meth)acrylate, butyl(meth)acrylate, iso-octyl(meth)acrylate, 2-ethylhexyl(meth)acrylate and the like. The acrylic polymer may contain co-monomers including polar co-monomers such as ethylenically unsaturated acid monomers including for example (meth)acrylic acid and itaconic acid.

In one embodiment, it is advantageous that the adhesive layer is removable i.e to allow removal of the graphic film after use. For purposes of this disclosure, an adhesive is considered to be "removable", if after final application to an intended substrate the sheet material can be removed without damage to the substrate at the end of the intended life of the sheet material at a rate in excess of 25 feet/hour (7.62 meters/hour) by hand with the optional use of heat.

In a particular embodiment, the adhesive layer is a repositionable adhesive layer. For the purposes of this disclosure, "repositionable" refers to the ability to be, at least initially, repeatedly adhered to and removed from a substrate without substantial loss of adhesion capability. A repositionable adhesive usually has a peel strength, at least initially, to the substrate surface lower than that for a conventional aggressively tacky PSA. Suitable repositionable adhesives include the adhesive types used on CONTROLTAC Plus Film brand and on SCOTCHLITE Plus Sheeting brand, both made by 3M Company, St., Paul, Minn., USA.

The adhesive layer in connection with the present disclosure may be a topologically structured adhesive layer or an adhesive layer having at least one microstructured surface. In particular, such an adhesive layer typically has a network of channels between the substrate surface on which the adhesive film is being applied and the adhesive layer. The presence of such channels allows air to pass laterally through the adhesive layer and thus allows air to escape from beneath the multi-layer sheet material and the surface substrate during application. The channels are typically produced in the adhesive layer through corresponding ridges of the release liner protecting the adhesive layer prior to application of the adhesive film. Accordingly, reference is made to the detailed description below regarding the release liner.

### RELEASE LINER

The adhesive layer is typically protected with a release liner. The release liner is preferably adhesive-repellant and more specifically comprises paper or film, which has been coated or modified with compounds of low surface energy relative to the adhesive applied. Organo silicone compounds, fluoropolymers, polyurethanes and polyolefins can serve this purpose. The release liner can also be a polymeric sheet produced from polyethylene, polypropylene, PVC, polyesters with or without the addition of adhesive-repellant compounds.

As mentioned, in a preferred embodiment, the release liner has a microstructured or micro-embossed pattern. The microstructure of the release liner (on its release side facing the adhesive layer) has a series of ridges along at least two in-plane directions whereby the ridges are interconnected thereby defining a number of recesses enclosed by ridges. The ridges will typically have an average height of not more than 30 micrometer. Typically, the average height may be between 5 and 20 micrometer. The average distance between ridges along an in plane direction of the release liner may be between 50 and 400 micrometer when measured at the top. The geometry or shape of the ridges is not particularly critical and includes, in cross-section, curved, rectangular, trapezoidal, triangular, bimodal, and the like.

The microstructure of the release liner may be formed by any suitable means including in particular by embossing the liner with an appropriate tool. Methods for producing release liners with a desired microstructure as described herein can be found in for example EP 951 518 and US 2008/0299346.

### OPTIONAL FURTHER LAYERS

The adhesive film may in certain embodiments contain additional layers. For example in one embodiment a primer layer can be arranged between the polymeric film layer and the adhesive layer.

As discussed above, the use of a primer layer is advantageous for the production of adhesive films where special effects are desired. For example, the primer layer may include metallic pigments or other special effect (for example: pearlescent) pigments. Further suitable pigments that may be added to the primer layer include those mentioned above in connection with the polymeric film and include white pigments, black pigments and/or color pigments other than black and white. Typically, the amount of pigments that may be included in a primer layer is at least 1 part by weight per 100 parts by weight of the primer. Generally, the total amount of pigments should not be more than 300 parts by weight of primer. A typical amount of pigment is from 8 to 100 per 100 parts by weight of the primer.

### Application of the curable coating compositions onto the polymeric film

The curable compositions can be applied directly onto at least a portion of the outer surface of the adhesive film with or without using a primer. Primers may be used to improve adhesion of the coating composition to the surface of the film. Suitable primers include primers for paints and coatings as is known in the art. Suitable commercially available examples include AP111 and 3M™ Adhesion Promoter 4298 (available from 3M), SHP 401 (available from Momentive) and Keim Silan Primer (alkoxyalkyl silane, available from Keim Paints). After drying and optionally curing the primer the coating composition can then be applied onto the primer. In general, the curable composition can be applied with good adhesion to the surface, without use of a primer.

The coating composition is applied onto the surface of the polymeric film in amounts sufficient to produce a coating that provides soil and stain resistance, stain repellency and easy-clean properties. Typically the coating thickness after curing is between 0.1 and 50 µ, preferably between 1 and 20µ.

A wide variety of coating methods can be used to apply the curable coating composition. Suitable methods of application include brushing, spraying, dipping, rolling, spreading, bar coating and the like. A preferred coating method for application of the curable coating composition includes spray application and bar coating.

The adhesive film to be coated can typically be contacted with the coating composition at ambient temperature (i.e. between 10°C and 35°C). An optional air drying step can be included when the coating composition comprises a solvent. Following application and/or optional drying the coated substrates can be cured thermally or with an ultraviolet (UV) curing device. Curing can be done in the presence of air or under inert atmosphere with a total UV dose sufficient to cure the coating.

### METHOD OF USE

The adhesive film as described above is typically used to produce a graphic on a substrate. The graphic may be an image graphic or a text message or a combination thereof. The graphic may have any size but the adhesive films in connection with the disclosure are particularly suitable for producing large size graphics for example extending over an area of at least 1 m² or at least 2 m². The adhesive film may be applied to a large variety of substrates. Typical applications include applying the film onto interior and exterior parts buildings or of vehicles including in particular motor vehicles such as trains, busses, trams, cars, vans, trucks as well as airplanes.

### EMBODIMENTS

Exemplary embodiments of the disclosure include:
Embodiment 1. Adhesive film for producing graphics comprising a polymeric film layer having on one major side an adhesive layer and on the opposite major side an anti-graffiti coating, wherein the anti-graffiti coating comprises a reaction product of at least
   a) a major amount of one or more compounds having at least two free radical polymerizable groups and at least
   b) a minor amount of one or more polysiloxane additives having two or more free radical polymerizable groups and
   wherein the adhesive film is colored.
Embodiment 2. Adhesive film according to embodiment 1 wherein the reaction product comprises a cross-linked reaction product and at least one of the compounds a) and/or polysiloxane additives b) have at least 3 free radical polymerizable groups.
Embodiment 3. Adhesive film according to any one of embodiments 1 or 2 wherein said free radical polymerizable groups are selected from acrylate and methacrylate groups.
Embodiment 4. Adhesive film according to any one of the preceding embodiments wherein the compounds a) are selected from 1,6-hexanediol diacrylate, trimethylolpropane triacrylate, pentaerythritol triacrylate, tripropyleneglycol diacrylate, dipentaerythritol pentaacrylate, oligomeric polyacrylates selected from polyester, polyether and/or polyurethane polyacrylates and blends thereof.
Embodiment 5. Adhesive film according to any one of the preceding embodiments wherein the reaction product comprises from 0.1 to 40 %, preferably from 0.2 to 30% by weight of polysiloxane additives based on the total weight of the reaction product.
Embodiment 6. Adhesive film according to any one of the preceding embodiments wherein the reaction product comprises up to 20% by weight of polysiloxane additives based on the total weight of the reaction product.
Embodiment 7. Adhesive film according to any one of the preceding embodiments wherein the polysiloxane additive comprises from 5 to 250 SiO-units.
Embodiment 8. Adhesive film according to any one of the preceding embodiments wherein the polysiloxane additive comprises polydimethylsiloxane units.
Embodiment 9. Adhesive film according to any one of the preceding embodiments wherein the polysiloxane additives are the Michael adducts of
   (i) a polysiloxane having at least one terminal nucleophilic group selected from a primary or secondary amino group or a thiol group and
   (ii) a compound having at least two, preferably at least three or even more α,β-unsaturated carbonyl groups.
Embodiment 10. Adhesive film according to embodiment 9 wherein the nucleophilic group is selected from a primary or secondary amino group.
Embodiment 11. Adhesive film according to any one of embodiments 9 or 10 wherein the compound having at least two α,β-unsaturated carbonyl groups is selected from a polyfunctional acrylate and methacrylate.
Embodiment 12. Adhesive film according to any one of embodiments 9 to 11 wherein the compound having at least two α,β-unsaturated carbonyl groups, comprises a poly-functional acrylate selected from the group consisting of 1,6 hexanediol diacrylate, tripropyleneglycol diacrylate, trimethylolpropane triacrylate, pentaerythritol triacrylate, ditrimethylolpropane tetraacrylate, dipentaerythritol pentaacrylate, ethoxylated trimethylolpropane triacrylate and blends thereof.
Embodiment 13. Adhesive film according to any one of embodiments 9 to 12 wherein the polysiloxane additives comprise from 5 to 250 SiO-units and one or more terminal groups T of the general formula (III)

   -N(R¹²)ᵣ[-CH₂CHR⁹-C(=O)O-R¹⁰-(OCO-CR¹¹=CH₂)ₙ]₂₋ᵣ (III)

   wherein R12 represents H or a group having from 1 to 30 carbon atoms, which may contain sulfur, nitrogen and/or oxygen, r is 0 or 1, n is an integer from 1 to 5. R9 and R11 represent H or a CH3 group. R10 represents a linking group containing from 1 to 30 carbon atoms, which may contain sulfur, nitrogen and/or oxygen atoms. In a preferred embodiment R10 represents an alkylene group.
Embodiment 14. Adhesive film according to any one of embodiments 9 to 13 wherein said one or more polysiloxane additives can be represented by the general formula (IV):

   Aₓ-Q¹-[Si(R⁵R⁶)-O]_{q}-[Si(R¹R²)-O]ₚ-Si(R³R⁴)-Q²-A'_{y} (IV)

   wherein R1, R2, R3, R4 and R5 independently represent an alkyl group or an aryl group, R6 represents a side chain -Q3-A"z ; Q1,Q2 and Q3 each independently represent a linking group containing 1 to 10 carbon atoms, which may contain sulfur, nitrogen and/or oxygen atoms, p represents an integer between 5 and 200 ; q is 0 or an integer between 1 and 50 and p+q is an integer between 5 and 250 ; x, y and z represent, independently from each other integers of 1 to 3 and wherein each A, A' and A" independently represent H or a terminal group T with the proviso that at least one of A, A' or A" is not H. In the above formula the groups -[Si(R⁵R⁶)-O]-and -[Si(R¹R²)-O]- may be present in blocks or may be randomly distributed.
Embodiment 15. Adhesive film according to any one of the embodiments 1 to 8 wherein the polysiloxane additive comprises a condensate of
   i) a polysiloxane having an isocyanate reactive group,
   j) a polyisocyanate and
   k) a compound having at least one free radical polymerizable group and an isocyanate reactive group.
Embodiment 16. Adhesive film according to embodiment 15 wherein the isocyanate reactive groups comprise a hydroxyl group or an amino group.
Embodiment 17. Adhesive film according to any one of embodiments 15 or 16 wherein compound k) is selected from isocyanate reactive acrylate or methacrylate monomers that can be represented by the formula VII:

   Z-Q⁴-[OC(O)CR⁷=CH₂]ₜ (VII)

   wherein Z represents an isocyanate reactive group, including OH or NR'H where R' is H or a lower alkyl group of 1 to 4 carbon atoms, Q4 represents an organic linking group having a valence of t+1 ; R7 is a lower alkyl with 1 to 4 C atoms or H and t is 2 to 6. Linking group Q4 is independently selected from the group consisting of an alkylene, an arylene, an aralkylene, an alkarylene, a straight or branched chain or cyclic group containing connecting group optionally containing heteroatoms such as O, N, and S and optionally a heteroatom-containing functional group such as carbonyl or sulfonyl, and combinations thereof.
Embodiment 18. Adhesive film according to any of the previous embodiments wherein the polymeric film comprises one or more layers comprising a polymer selected from the group consisting of homo- and copolymers of vinyl chloride, thermoplastic polyurethane, cellulose ester, polyolefin, polyesters, polycarbonate and combinations thereof.
Embodiment 19. Adhesive film according to any one of the previous embodiments wherein the polymeric film is colored.
Embodiment 20. Adhesive film according to any of the previous embodiments wherein the adhesive film comprises a further layer and wherein said further layer is colored.
Embodiment 21. Adhesive film according to any of the previous embodiments wherein the anti-graffiti coating has a thickness between 1 and 50 µm.
Embodiment 22. Adhesive film according to any of the previous embodiments wherein the adhesive film comprises a primer layer arranged between the polymeric film layer and the adhesive layer.
Embodiment 23. Adhesive film according to any of the previous embodiments wherein the adhesive layer comprises a pressure sensitive adhesive comprising an acrylic polymer.
Embodiment 24. Adhesive film according to any of the previous embodiments wherein the adhesive layer is a topologically structured adhesive layer or an adhesive layer having at least one microstructured surface.
Embodiment 25. Adhesive film according to any of the previous embodiments wherein the adhesive layer is removable.
Embodiment 26. Adhesive film according to any of the previous embodiments wherein the adhesive layer is a repositionable adhesive layer.
Embodiment 27. Adhesive film according to any one of the previous embodiments wherein the adhesive layer is protected by a release liner, the release liner comprising on the major surface contacting the adhesive layer a series of ridges along an in-plane direction and wherein after removal of the release liner, an adhesive film is obtained having on one major side an adhesive layer having a surface topography that is an inverse topography of the release liner topography defined by the series of ridges.
Embodiment 28. Method of making a graphic comprising the imaging an adhesive film as set out in embodiments 1 to 27.
Embodiment 29. Method according to embodiment 28 wherein the adhesive film is imaged by cutting an image in the adhesive film.
Embodiment 30. Substrate having on one major surface an adhesive film according to any one of embodiments 1 to 27.

The following examples further illustrate the disclosure without the intention however to limit the invention thereto. All parts and % are by weight unless indicated otherwise.

### ABBREVIATIONS

| Abbreviations | Product | Availability |
|---|---|---|
| IPDI | Isophorone diisocyanate | Evonik-Degussa |
| IM-11 | α,ω polydimethylsiloxane diol with OH value 110 | Wacker Chemie AG |
| KF-6002 | α,ω polydimethylsiloxane diol with OH value 30-38 | Shin-Etsu |
| Fluid NH15D | α,ω polydimethylsiloxane diamine, Mₙ: 900-1300 | Wacker Chemie AG |
| Fluid NH40D | α,ω polydimethylsiloxane diamine, Mₙ: 2700-3200 | Wacker Chemie AG |
| TMPTA | trimethylol propane triacrylate, obtained as SR351 | Sartomer, Arkema-group, Colombes Cedex, France). |
| PET3A | pentaerythritol triacrylate, obtained as SR444D | Sartomer, Arkema-group, |
| 2-HEA | 2-hydroxy ethylacrylate | |
| IPA | Isopropyl alcohol | Exxon |
| DBTDL | dibutyl tindilaurate | Air Products |
| BHT | 2,6-di- t.butyl-4-methylphenol | Sigma-Aldrich |
| Irgacure 500 | UV initiator | BASF |
| Ebecryl P 116 | Amino acrylate | Cytec Surface Specialties |

### SYNTHESIS OF POLYSILOXANE ADDITIVES (PSIL)

### PSIL-1: IM-11 / 2 IPDI / 2 PET3A (100% solids)

A 500 ml reaction bottle was charged respectively with 53.28 g IPDI, 134.4 g IM-11 and 0.386 g DBTDL. The bottle was sealed and reacted for 3 hrs in a pre-heated Launder-o-meter at 75°C. After cooling to 40 °C 0.154 g BHT and 139.24 g PET3A were added and the reaction was run for 16 hrs at 75°C. A homogeneous, colorless, clear viscous reaction product was obtained, which became a solid paste at room temperature. IR analysis showed that all isocyanate groups had been consumed.

### PSIL-2: KF-6002 / 2 IPDI / 2 PET3A (100% solids)

A 100 ml reaction bottle was charged with 4.44 g IPDI, 32 g KF-6002 and 58 mg DBTDL. The bottle was sealed and reacted for 2 hrs in a pre-heated Launder-o-meter at 75°C. After cooling 23 mg BHT and 10.09 g PET3A were added and reacted for 16 hrs at 75°C. A slightly hazy, colorless, viscous reaction product was obtained, which became a solid paste at room temperature. IR analysis showed that all isocyanate groups had been consumed.

### PSIL-3: IM-11 / 2 IPDI / 2 2-HEA (100%)

A 100 ml reaction bottle was charged respectively with 11.1 g IPDI, 28.0 g IM-11 and 0.022 g DBTDL. The bottle was sealed and reacted for 1 hr in a pre-heated Launder-o-meter at 75°C. After cooling to 40°C 0.022 g BHT and 5.80 g 2-HEA were added and reacted for 16 hrs at 75 °C. A clear yellowish, viscous reaction product was obtained, which became a solid paste at room temperature. IR analysis showed that all isocyanate groups had been consumed.

### PSIL-4: KF-6002 / 2 IPDI / 2 2-HEA (60% in ethylacetate)

A 100 ml reaction bottle was charged respectively with 4.44 g IPDI, 32.0 g KF-6002, 0.019 g BHT, 38.8 g ethylacetate and 0.048 g stannous octoate catalyst. The bottle was sealed and reacted for 3 hrs in a pre-heated Launder-o-meter at 70°C. After cooling to 40°C 2.32 g 2-HEA was added and reacted for 16 hrs at 75°C. Since not all isocyanate groups had reacted away an additional 0.12 g 2-HEA was charged and the reaction was continued for another 4 hrs at 75°C. A clear yellowish reaction product was obtained. IR analysis indicated that all isocyanate groups had been consumed.

### PSIL-5: Fluid NH15D / TMPTA (30% Fluid NH15D in TMPTA)

A 100 ml reaction bottle was charged with 58.33 g TMPTA, 0.042 g BHT and 25.00 g Fluid NH15D respectively. The reagent mixture was hazy initially, but turned clear after 5 minutes at room temperature. The bottle was sealed and reacted for 16 hrs in a pre-heated Launder-o-meter at 75°C. The product structure and full conversion was confirmed via 1 H NMR spectroscopy.

### PSIL-6: Fluid NH40D / TMPTA (30% Fluid NH40D in TMPTA) - 50% in IPA)

A 500 ml reaction bottle was charged with 116.67 g TMPTA, 166.7 g IPA, 0.083 g BHT and 50.00 g Fluid NH40D respectively. The reagent mixture was hazy initially, but turned clear after 5 minutes at room temperature. The bottle was sealed and reacted for 16 hrs in a pre-heated Launder-o-meter at 75°C. The product structure and full conversion was confirmed via 1 H NMR spectroscopy.

### COATING AND CURING

Coating compositions were prepared by mixing the polysiloxane polyacrylates with polyfunctional acrylate TMPTA and Ebecryl P116 amino acrylate in amounts as given in the tables below. Further were added 3 parts Irgacure 500 UV initiator, 250 ppm MEHQ and 50 ppm phenothiazine based on 100 parts reactive compounds.

The coating compositions were coated using bar coating application. Coatings were made on white vinyl graphic film (Controltac™ Plus Graphic Film IJ180 ; available from 3M) using a 6µ or 12µ (as indicated in the examples) K Hand Coater Bar (available from RK Print Coat Ltd, UK) at room temperature. The coated substrates were subsequently cured with an ultraviolet (UV) curing device (available from American UV Co., Murray Hill, NY, USA) equipped with a mercury medium pressure H bulb AUV6A/300 OF. Curing was done under inert atmosphere with a total UV dose of about 1350 mJ/cm² (UV-C: about 90 mJ/cm²).

### TEST METHODS

Respective data of tests shown in the following Examples and Comparative Examples are based on the following methods of measurement and evaluation criteria:

### 1. Test methods

### a. Stain repellency test

The marker stain repellency was evaluated when applying the stain and was rated using a number between 1 and 5, where 1 indicates that the "marker drops fully beaded up" and 5 refers to "marker paint wets the surface completely".

### b. Ease of stain removal

The ease of stain removal via rubbing with a dry cotton cloth was rated on a scale from 1 to 3 wherein 1 means "easy removal" ; 2 : medium and 3 : difficult removal.

### c. Stain resistance

After the stain was removed by rubbing for 20 seconds with a dry cotton cloth, the residual stain was visually rated using a number between 1 and 8, where 1 means "completely stained" and 8 refers to "no stain left".

### 2. Application of stains

The coated films were stained using 5 different graffiti markers: Felt M180 black, Felt M180 blue, Edding 500 black, Edding 500 red and Artline 100N blue. The anti-graffiti properties of the coated films were evaluated under two different conditions:

### a. Condition 1: One time graffiti - dry, solventless cleaning

The different graffiti markers were applied onto pieces of the coated substrate (1 cm x 5 cm each). After the stain repellency was evaluated, the test material was dried for 30 minutes at room temperature. Stain removal was tested by rubbing for 20 seconds with a dry cotton cloth. After dry rubbing, the stain resistance was recorded. All results recorded are the averages of the results obtained with the different markers.

### b. Condition 2: extended graffiti test - temperature resistance and solvent cleaning

A stencil made of aluminium with a number of equal squares (size 3.5 cm x 3.5 cm cut) was used for precise multiple application of graffiti on the substrate.

Different types of graffiti markers were applied on the coated substrate in the designated squares of the stencil. The test material was then dried in an oven at 70°C for 30 minutes. The material was removed from the oven and cooled down for 5 minutes. The graffiti stains (squares) were removed using a paper towel soaked in isopropyl alcohol. The test samples were dried for 15 minutes. The residual stains were then visually rated according to the stain resistance test. The graffiti staining, 70°C drying and solvent cleaning procedure was repeated 3 times. The average stain resistance of the 3 cycles is recorded in the tables.

### EXAMPLES

### Examples 1 to 9 and Comparative example C-1

In examples 1 to 9 and comparative C-1, Controltac™ Plus Graphic Films IJ180 were coated with the coating compositions indicated in table 1 according to the general procedure outlined above (using 12µ coater bar). All coated samples were stained with the following markers: Felt M180 black, Felt M180 blue, Edding 500 black, Edding 500 red and Artline blue. The staining and evaluation of stain repellency, ease of stain removal and stain resistance were evaluated according to Condition 1 outlined above. The results recorded in table 2 are the averages of the results obtained with the 5 markers.

**Table 1: Coating compositions (% by weight)**

| Ex | TMPTA | PSIL-1 | PSIL-5 | PSIL-6 | Ebecryl P116 |
|---|---|---|---|---|---|
| 1 | 96 | 1 | / | / | 3 |
| 2 | 95 | 2 | / | / | 3 |
| 3 | 94 | 3 | / | / | 3 |
| 4 | 96 | / | 1 | / | 3 |
| 5 | 95 | / | 2 | / | 3 |
| 6 | 94 | / | 3 | / | 3 |
| 7 | 96 | / | / | 1 | 3 |
| 8 | 95 | / | / | 2 | 3 |
| 9 | 94 | / | / | 3 | 3 |
| C-1 | 97 | / | / | / | 3 |

**Table 2: Test results one time graffiti (condition 1 ; average of 5 markers)**

| Example | Stain repellency | Ease of stain removal | Stain resistance |
|---|---|---|---|
| 1 | 1.0 | 1.0 | 7.1 |
| 2 | 1.0 | 1.0 | 7.0 |
| 3 | 1.0 | 1.0 | 7.3 |
| 4 | 1.1 | 1.3 | 6.5 |
| 5 | 1.1 | 1.3 | 6.8 |
| 6 | 1.1 | 1.3 | 6.4 |
| 7 | 1.0 | 1.0 | 7.0 |
| 8 | 1.0 | 1.0 | 7.3 |
| 9 | 1.0 | 1.0 | 7.2 |
| C-1 | 4.5 | 3.0 | 1.4 |

### Examples 10 to 13, comparative example C-2 and reference example Ref-1

In examples 10 to 13 and comparative C-2, Controltac™ Plus Graphic Films IJ180 were coated with the coating compositions, as listed in table 3, according to the general procedure outlined above (using 6µ coater bar). Reference example Ref-1 was made with uncoated Controltac™ film. The coated and uncoated samples were stained according to Condition 2 with markers alisted in table 4. The average stain resistance of 3 staining cycles are recorded in table 4.

**Table 3: coating composition**

| Ex | TMPTA | PSIL-1 | PSIL-2 | PSIL-3 | PSIL-4 | Ebecryl P116 |
|---|---|---|---|---|---|---|
| 10 | 92 | 5 | / | / | / | 3 |
| 11 | 95 | / | 2 | / | / | 3 |
| 12 | 92 | / | / | 5 | / | 3 |
| 13 | 95 | / | / | / | 2 | 3 |
| C-2 | 97 | / | / | / | / | 3 |

**Table 4 : anti-graffiti performance condition 2 : average of 3 graffiti cycles**

| Ex | M180 Felt black | M 180 Felt blue | Edding 500 black | Edding 500 red | Average of all stains |
|---|---|---|---|---|---|
| 10 | 7.0 | 7.5 | 7.5 | Not tested | 7.3 |
| 11 | 6.0 | 7.5 | 7.5 | 7.0 | 7.0 |
| 12 | 6.0 | 6.5 | 6.5 | Not tested | 6.3 |
| 13 | 5.0 | 7.0 | 7.0 | 6.5 | 6.4 |
| C-2 | 5.0 | 6.5 | 6.5 | 4.0 | 5.5 |
| Ref-1 | 2.0 | 1.0 | 2 | 1.0 | 1.5 |

## Claims

1. Adhesive film for producing graphics comprising a polymeric film layer having on one major side an adhesive layer and on the opposite major side an anti-graffiti coating, wherein the anti-graffiti coating comprises a reaction product of at least
a. a major amount of one or more compounds having at least two free radical polymerizable groups and at least
b. a minor amount of one or more polysiloxane additives having two or more free radical polymerizable groups and
wherein the adhesive film is colored.

2. Adhesive film according to claim 1 wherein said free radical polymerizable groups are selected from acrylate and methacrylate groups.

3. Adhesive film according to any one of the preceding claims wherein the compounds a) are selected from 1,6-hexanediol diacrylate, trimethylolpropane triacrylate, pentaerythritol triacrylate, tripropyleneglycol diacrylate, dipentaerythritol pentaacrylate, oligomeric polyacrylates selected from polyester, polyether and/or polyurethane polyacrylates and blends thereof.

4. Adhesive film according to any one of the preceding claims wherein the reaction product comprises from 0.1 to 40 % by weight of polysiloxane additives based on the total weight of the reaction product.

5. Adhesive film according to any one of the preceding claims wherein the polysiloxane additives comprise from 5 to 250 SiO-units.

6. Adhesive film according to any one of the preceding claims wherein the polysiloxane additives are the Michael adducts of
i) a polysiloxane having at least one terminal nucleophilic group selected from a primary or secondary amino group or a thiol group and
j) a compound having at least two, preferably at least three or even more α,β-unsaturated carbonyl groups.

7. Adhesive film according to claim 5 wherein the polysiloxane additives comprise from 5 to 250 -SiO- units and one or more terminal groups T of the general formula (III)
-N(R¹²)ᵣ[-CH₂CHR⁹-C(=O)O-R¹⁰-(OCO-CR¹¹=CH₂)ₙ]₂₋ᵣ (III)
wherein R12 represents H or an alkylgroup having from 1 to 30 carbon atoms ; R10 represents a linking group, R9 and R11 represent H or a CH3 group, r is 0 or 1 and n is 1 to 5, preferably 2 to 4.

8. Adhesive film according to any one of claims 1 to 5 wherein the polysiloxane additive comprises a condensate of
i) a polysiloxane having an isocyanate reactive group,
j) a polyisocyanate and
k) a compound having at least one free radical polymerizable group and an isocyanate reactive group.

9. Adhesive film according to any one of the preceding claims wherein the polymeric film comprises one or more layers comprising a polymer selected from homo- and copolymers of vinyl chloride.

10. Adhesive film according to any one of the preceding claims wherein the polymeric film is colored.

11. Adhesive film according to any one of the preceding claims wherein the adhesive film comprises a further layer and wherein said further layer is colored.

12. Adhesive film according to any one of the preceding claims wherein the adhesive layer comprises a pressure sensitive adhesive comprising an acrylic polymer.

13. Adhesive film according to any one of the previous claims wherein the adhesive layer is protected by a release liner, the release liner comprising on the major surface contacting the adhesive layer a series of ridges along an in-plane direction and wherein after removal of the release liner, an adhesive film is obtained having on one major side an adhesive layer having a surface topography that is an inverse topography of the release liner topography defined by the series of ridges.

14. Method of making a graphic comprising the imaging by cutting an adhesive film as set out in claims 1 to 13.

15. Substrate having on one major surface an adhesive film according to any one of claims 1 to 13.
